# EUROPÄISCHE PATENTSCHRIFT

(11) **EP 3 363 165 B1**
(45) Veröffentlichungstag und Bekanntmachung des Hinweises auf die Patenterteilung: **30.09.2020**
(21) Anmeldenummer: 16794206.9
(22) Anmeldetag: 17.10.2016
(51) Int. Cl.: H04L 12/44

(54) **VERFAHREN UND COMPUTERSYSTEM ZUR SCHNELLEN ÜBERTRAGUNG VON ZEITGESTEUERTEN ECHTZEITNACHRICHTEN**
METHOD AND COMPUTER SYSTEM FOR QUICKLY TRANSMITTING TIME-CONTROLLED REAL-TIME MESSAGES
PROCÉDÉ ET SYSTÈME INFORMATIQUE PERMETTANT UNE TRANSMISSION RAPIDE DE MESSAGES EN TEMPS RÉEL À COMMANDE TEMPORELLE

(30) Priorität: 16.10.2015 AT 508822015; 16.10.2015 AT 508862015
(43) Veröffentlichungstag der Anmeldung: 22.08.2018
(73) Patentinhaber: TTTech Industrial Automation AG, 1040 Wien (AT)
(72) Erfinder: KOPETZ, Hermann, 2500 Baden (AT); POLEDNA, Stefan, 3400 Klosterneuburg (AT)
(74) Vertreter: Patentanwaltskanzlei Matschnig & Forsthuber OG
(86) Internationale Anmeldenummer: PCT/AT2016/060079
(87) Internationale Veröffentlichungsnummer: WO 2017/063016

(56) Entgegenhaltungen:
- EP-A1- 1 139 602
- EP-A1- 2 595 345
- US-A1- 2006 018 327
- US-A1- 2015 208 347

## Beschreibung

Die Erfindung betrifft ein Verfahren, insbesondere zeitgesteuertes fehlertolerantes Verfahren, zum periodischen Transport von Echtzeitdaten in einem Computersystem, insbesondere in einem verteilten Computersystem, welches Computersystem Knotenrechner, insbesondere eine Vielzahl von Knotenrechnern, und Verteilereinheiten, insbesondere eine Vielzahl von Verteilereinheiten, umfasst, wobei die Knotenrechner und die Verteilereinheiten Zugriff auf eine globale Zeit haben, und wobei Echtzeitdaten mittels zeitgesteuerter Echtzeitnachrichten transportiert werden.

Weiters betrifft die Erfindung ein Computersystem, insbesondere verteiltes Computersystem, zum periodischen Transport von Echtzeitdaten, welches Computersystem Knotenrechner, insbesondere eine Vielzahl von Knotenrechnern, und Verteilereinheiten, insbesondere eine Vielzahl von Verteilereinheiten, umfasst, wobei die Knotenrechner und die Verteilereinheiten Zugriff auf eine globale Zeit haben, und wobei Echtzeitdaten mittels zeitgesteuerter Echtzeitnachrichten transportiert werden.

Bei dem Computersystem handelt es sich vorzugsweise um ein verteiltes Echtzeitcomputersystem.

Weiters betrifft die Erfindung eine Verteilereinheit zum periodischen Transport von Echtzeitdaten in einem Computersystem, insbesondere einem verteilten Computersystem, welches Computersystem Knotenrechner, insbesondere eine Vielzahl von Knotenrechnern, und Verteilereinheiten, insbesondere eine Vielzahl von Verteilereinheiten, umfasst, wobei die Knotenrechner und die Verteilereinheiten Zugriff auf eine globale Zeit haben, und wobei Echtzeitdaten mittels Nachrichten, vorzugsweise mittels zeitgesteuerter Echtzeitnachrichten, transportiert werden, und wobei die Topologie des Computersystems einem Intree entspricht, wobei an den Blättern des Intrees Knotenrechner angeordnet sind, wobei jedem dieser Knotenrechner jeweils ein oder mehrere Sensoren zugeordnet sind, und wobei die an den Blättern des Intrees angeordneten Knotenrechner zu, vorzugsweise synchronisierten, Zeitpunkten Sensordaten in der Payload von Nachrichten in Richtung einer an der Wurzel des Intrees befindlichen Steuerungszentrale senden.

In vielen Echtzeitsystemen, vor allem im Bereich der Regelungstechnik werden periodische Prozesse realisiert [3]. In einem verteilten Echtzeitcomputersystem bezeichnet man einen sich zeitlich wiederholenden periodischen Prozessabschnitt als einen *Frame.*

In einem verteilten Echtzeitcomputersystem beginnt ein Frame mit der synchronisierten Beobachtung eines technischen Prozesses durch beispielsweise räumlich verteilte Sensoren, um den Zustand dieses technischen Prozesses zu einem vorgegebenen Zeitpunkt zu erfassen. Dies ist beispielhaft in der Patentanmeldung EP 2 595 345 A1 dargestellt. Jedem Sensor ist vorzugsweise ein Knotenrechner zugeordnet, wobei Sensor und Knotenrechner als getrennte Baueinheiten ausgebildet und miteinander verbunden sein können, oder Sensor und Knotenrechner sind als eine Baueinheit ausgebildet ("intelligenter Sensor").

Ein verteiltes Echtzeitcomputersystem besteht aus einer Vielzahl von *Knotenrechnern* mit möglicherweise angeschlossenen Sensoren und Aktuatoren, die über eine oder mehrere *Verteilereinheiten* Echtzeitnachrichten austauschen.

Die Beobachtung eines technischen Prozesses kann nur dann synchron stattfinden, wenn alle Knotenrechner, die in der Regel dezentral angeordnet sind, Zugriff auf eine globale Zeit haben [5]. Beispielsweise kann die im zeitgesteuerten TT-Ethernet Protokoll [4] enthaltene interne Uhrensynchronisation zum Aufbau einer globalen Zeit in allen Komponenten eines verteilten Echtzeitsystems, insbesondere eines verteilten Echtzeitcomputersystems, genutzt werden. Da es möglich ist, die interne Ethernet Zeit mit einem externen Zeitstandard, z.B. GPS, zu synchronisieren, kann die Ethernet Zeit die Synchronisation der Sensoren auch übernehmen, wenn eine externe Synchronisation erforderlich ist.

Die bei den Sensoren angeordneten bzw. den Sensoren zugeordneten Knotenrechner oder die intelligenten Sensoren führen eine erste Vorverarbeitung der Sensordaten durch und senden diese vorverarbeiteten Sensordaten, vorzugsweise in einem *periodisch wiederkehren Zeitschlitz,* in der Form von Echtzeitnachrichten über ein Echtzeitkommunikationssystem an eine Steuerungszentrale. Die Auswertung der eintreffenden Sensordaten in der Steuerungszentrale ermöglicht es, den aktuellen Zustand des beobachteten technischen Prozesses zu erfassen und (neue) Sollwerte für vorhandene Aktuatoren vorzugeben.

Bei schnellen technischen Prozessen, z.B. einem *Smart Grid* [4], müssen gleichzeitig erfasste Sensordaten von einer Vielzahl von Sensoren, die oft hunderte Kilometer voneinander entfernt sind, mit einer Latenz im Bereich von Millisekunden in die Steuerungszentrale transportiert werden [5].

Die Länge der Nutzdaten von Sensoren, der *Sensordaten,* ist oft kurz, zum Beispiel 2 Byte. Wenn die Sensordaten mit einem Standardprotokoll, wie z.B. TT Ethernet [1, 6] übertragen werden, so muss selbst bei einer *Payload* [7] von nur 2 Bytes eine ganze Ethernet Nachricht mit der minimalen Länge von 64 Bytes übertragen werden. Wenn die Daten von 1000 räumlich verteilten Sensoren in 1000 Ethernet Nachrichten übertragen werden, so ist für die Übertragung von 2000 Byte Nutzdaten ein Datenvolumen von 64000 Bytes zu bewältigen. In einem 100 Mbit Ethernet System benötigt man zur Übertragung eines solchen Datenvolumens zusätzlich zu der entfernungsabhängigen Signallaufzeit eine reine Übertragungszeit im Bereich von Millisekunden.

Es ist eine Aufgabe der Erfindung, eine vergleichsweise schnellere Übertragung zu ermöglichen.

Diese Aufgabe wird mit einem eingangs erwähnten Verfahren und einem eingangs erwähnten Computersystem dadurch gelöst, dass erfindungsgemäß die Topologie des Computersystems einem Intree entspricht, wobei an den Blättern des Intrees Knotenrechner angeordnet sind, wobei jedem dieser Knotenrechner jeweils ein oder mehrere Sensoren zugeordnet sind, und wobei die an den Blättern des Intrees angeordneten Knotenrechner zu, vorzugsweise synchronisierten, Zeitpunkten Sensordaten in der Payload von zeitgesteuerten Echtzeitnachrichten in Richtung einer an der Wurzel des Intrees befindlichen Steuerungszentrale senden, und wobei Verteilereinheiten an inneren Knoten des Intrees, insbesondere alle Verteilereinheiten an inneren Knoten des Intrees, welche Echtzeitnachrichten von mehreren Sendern, d.h. von zumindest zwei Knotenrechnern, oder von zumindest zwei Verteilereinheiten, oder von zumindest einem Knotenrechner und zumindest einer Verteilereinheit, empfangen, die Payloads der zwei oder mehreren, insbesondere in einem a priori festgelegten Zeitpunkt oder Zeitfenster, in der jeweiligen Verteilereinheit eintreffenden Echtzeitnachrichten jeweils in die Payloads von zumindest einer neuen Echtzeitnachricht, vorzugsweise in die Payload von genau einer neuen Echtzeitnachricht, kopieren, und wobei diese zumindest eine neue Echtzeitnachricht, insbesondere genau eine neue Echtzeitnachricht, zu einem a priori festgelegten Zeitpunkt, insbesondere von den Verteilereinheiten, in Richtung der Steuerungszentrale gesendet wird.

Weiters kann die Aufgabe mit einer Verteilereinheit gelöst werden, welche dazu eingerichtet ist, die oben beschriebenen Maßnahmen umzusetzen.

Dieses Vorgehen in den Verteilereinheiten wird auf dem Weg zur Steuerungszentrale in den Verteilereinheiten so lange wiederholt wird, bis die Sensordaten zu einem a priori bestimmten Zeitpunkt in der Steuerungszentrale eintreffen.

Vorteilhafte Ausgestaltungen des erfindungsgemäßen Verfahrens bzw. Computersystems, welche jeweils für sich allein oder in beliebiger Kombination realisiert sein können, sind im Folgenden aufgezählt:
- die, insbesondere bei den verteilten, Sensoren angeordneten Knotenrechner werden mit einer von dem TTEthernet Protokoll zur Verfügung gestellten Zeit synchronisiert;
- die Echtzeitnachrichten werden mit dem TTEthernet Protokoll übertragen;
- bei einem Kopieren der Sensordaten in eine neue Echtzeitnachricht wird eine Kennung dieser Daten in die neue Echtzeitnachricht, in welche die Sensordaten kopiert werden, mitkopiert;
- Sensordaten von einem bestimmten Sensor werden jeweils an eine bestimmte Position in der Payload einer neuen Echtzeitnachricht kopiert. Mit jeder der letzten beiden Maßnahmen kann sichergestellt werden, dass die Sensordaten in einer neuen Echtzeitnachricht nach wie vor dem richtigen Sensor zugeordnet werden können.

In vielen Anwendungen entspricht die Netzwerktopologie einem *In-Tree* [8], wo die an den Blättern dieses In-Trees angeordneten Knotenrechner von Sensoren, oder intelligente Sensoren, zu *a priori* vorgegebenen, vorzugsweise synchronisierten Zeitpunkten Sensordaten in der Payload von zeitgesteuerten Echtzeitnachrichten in Richtung einer an der Wurzel des In-Tree befindlichen Steuerungszentrale senden. Erfindungsgemäß kopieren an den inneren Knoten des In-Tree liegende, entsprechend intelligente, Verteilereinheiten die Payloads von mehreren bzw. vielen nahezu gleichzeitig eintreffenden Sensornachrichten in die Payload einer einzigen neuen Sensornachricht und senden diese neue Sensornachricht mit der erweiterten Payload in Richtung der Steuerungszentrale.

Falls die maximale Payload einer neuen Echtzeitnachrichten nicht ausreicht für alle eintreffenden Echtzeitnachrichten, wird eine zweite und falls notwendig, dritte, vierte usw. neue Echtzeitnachricht generiert.

Dieser Vorgang wiederholt sich in Richtung der Steuerungszentrale solange, bis die Steuerungszentrale erreicht wird.

Bei einem schnellen technischen Prozess müssen möglichst kurzdauernde Frames realisiert werden. Die Dauer eines Frames wird von der Summe der *Transportdauern* der Echtzeitnachrichten, insbesondere in den periodisch wiederkehren Zeitschlitzen, des Netzwerk und den *Verarbeitungsdauern* der Echtzeitdaten in den betroffenen Knotenrechnern bestimmt.

Unter dem Begriff der *Transportdauer einer Nachricht* wird das Echtzeitintervall zwischen dem Beginn des Sendens der Nachricht beim *sendenden Knotenrechner* und dem Ende des Empfangs der Nachricht beim *empfangenden Knotenrechner* verstanden.

Im Zeitintervall zwischen dem *Beginn des Sendens* einer Nachricht von einem Knotenrechner oder einer Verteilereinheit und dem *Ende des Sendens* dieser Nachricht wird die Nachricht als *auslaufende Nachricht* bezogen auf diesen Knotenrechner oder diese Verteilereinheit bezeichnet.

Im Zeitintervall zwischen dem *Beginn des Empfangs* einer Nachricht bei einem Knotenrechner oder einer Verteilereinheit und dem *Ende des Empfangs* dieser Nachricht wird die Nachricht als *einlaufende Nachricht* bezogen auf diesen Knotenrechner oder diese Verteilereinheit bezeichnet.

Unter der *Payload einer Nachricht* werden die Nutzdaten verstanden, die im Rahmen der Kommunikation zwischen zwei Partnern ausgetauscht werden [7].

Unter einer Echtzeitnachricht wird eine Nachricht verstanden, die Echtzeitdaten enthält und die innerhalb eines vorgegebenen Zeitintervalls (Echtzeitinterintervalls) bei einem Empfänger eintreffen soll.

Die Transportdauer einer Nachricht in einem verteilten Echtzeitcomputersystem ergibt sich aus der Summe der folgenden drei Dauern:
1. Die *Signallaufzeiten* durch das Netzwerk bzw. Computersystem. Dieser Term ergibt sich aus der Summe der physikalischen Laufzeiten der Signale im Netzwerk und wird im Wesentlichen von der physikalischen Länge der Übertragungskanäle bestimmt. Als Richtgröße kann ein Wert von 5 µsec/km [5] angenommen werden, so dass ein Übertragungskanal mit einer summierten Länge von 200 m eine summierte Signallaufzeit von 1 psec bedingt.
2. Die *Übertragungsdauer* einer Nachricht ergibt sich aus dem Quotienten [Nachrichtenlänge (in Bits)]/[Bandbreite des Übertragungskanals (in Bit/sec)]. Eine Nachricht mit einer Länge von 100 Bytes, d.s. 800 Bits benötigt in einem Übertragungskanal mit einer Bandbreite von 100 MBit/sec eine *Übertragungsdauer* von 8 psec.
3. Die *Verzögerungsdauern* einer Nachricht in den Verteilereinheiten des Netzwerks. In einem Netzwerk wird zwischen zwei Verfahren des Nachrichtentransports unterschieden, dem *store-and-forward Verfahren* und dem *cut-through Verfahren [3].* Beim *store and forward Verfahren* wird eine eintreffende Nachricht in einer Verteilereinheit als Ganzes zwischengespeichert, bevor sie von der Verteilereinheit in Richtung ihres Ziels weitergeleitet wird. Wenn z.B. eine Nachricht mit einer Länge von 100 Byte entsprechen dem *store-and-forward Verfahren* durch eine Verteilereinheit transportiert wird, so ergibt sich bei einer Bandbreite von 100 MBit/sec eine Verzögerungsdauer der Nachricht von mindestens 8 psec in dieser Verteilereinheit. Muss eine Nachricht zwischen dem sendenden Rechnerknoten und dem empfangenden Rechnerknoten fünf Verteilereinheiten durchlaufen, so beträgt die Summe der *Verzögerungsdauern* 40µsec.

Bei einer Übertragungskanallänge von 100 m, einer Bandbreite des Übertragungskanals von 100 MBit/ sec, einer Nachrichtlänge von 100 Bytes und einem Transport durch fünf Verteilereinheiten beträgt die *Transportdauer einer Echtzeitnachricht* die nach dem *store and forward Verfahren* durch das Netzwerk transportiert wird:

**Tab. 1: Transportdauer einer Nachricht**

| | |
|---|---|
| Signallaufzeit | .5 µsec |
| Übertragungsdauer | 8 µsec |
| Verzögerungsdauer | 40 psec. |
| Summe | 48.5 µsec. |

Da die Signallaufzeit einer Nachricht von der räumlichen Länge des Übertragungskanals bestimmt wird, kann sie nicht reduziert werden ohne die räumlichen Struktur des Netzwerks zu verändern. Die Übertragungsdauer kann reduziert werden wenn die *dynamischen Daten* optimal kodiert und von der statischen *Beschreibung* getrennt werden [8]. Die Zuordnung der statischen Beschreibung der Daten zu den in einer Nachricht transportieren dynamischen Daten kann über die Positionierung der dynamischen Daten in der Nachricht erfolgen.

Um eine Lösung dafür anzugeben, wie die Transportdauern von Nachrichten, insbesondere Echtzeitnachrichten, vorzugsweise von zeitgesteuerten Nachrichten, insbesondere zeitgesteuerten Echtzeitnachrichten, die über ein zeitgesteuertes Computernetzwerk, bestehend aus einer Vielzahl von verbundenen Verteilereinheiten gesendet werden, reduziert werden können, kann weiters vorgesehen sein, dass bei einem vorstehend beschriebenen Verfahren, einer vorstehend beschriebenen Verteilereinheit und einem vorstehend beschriebenen Computersystem der Payload von einer oder mehreren in einer Verteilereinheit einlaufenden Nachrichten mit einer auslaufenden Nachricht aus der Verteilereinheit transportiert wird, und wobei *a priori* für jede Verteilereinheit ein *individueller Zeitplan* erstellt wird, in welchem ein periodisch wiederkehrender Beginnzeitpunkt des Sendens für eine aus der jeweiligen Verteilereinheit auslaufende Nachricht enthalten ist, welcher *a priori* errechnet wird aus
- dem *a priori* bekannten Zeitpunkt des Eintreffens einer bestimmenden, beispielsweise a priori festgelegten, zu transportierenden Payload einer der einlaufenden Nachrichten, insbesondere einer zu transportierenden zeitkritischen Payload einer der einlaufenden Nachrichten,
- minus dem a priori bekannten Vorlaufintervall der auslaufenden Nachricht,
- plus mindestens einem Zeitintervall, das erforderlich ist, um ein Datenelement der bestimmenden Payload, insbesondere der zeitkritischen Payload der einlaufenden Nachricht, in ein Datenelement der Payload der auslaufenden Nachricht zu kopieren,
und wobei die Payloads der einlaufenden Nachrichten durch Ausführung dieses a *priori* erstellten Zeitplans in die Payload der auslaufenden Nachricht kopiert werden.

Es wird somit auch ein Verfahren offengelegt, wie insbesondere in einem zeitgesteuerten Computernetzwerk, das die Struktur eines *In-Trees* hat, die im Datentransport auftretenden *Verzögerungsdauern* wesentlich reduziert werden können, indem die Payloads von zwei oder mehr in einer Verteilereinheit einlaufenden Nachrichten, die vorzugsweise zu einem bestimmten Zeitpunkt bzw. insbesondere in einem bestimmten Zeitschlitz einlaufen, in die Payload einer neuen, auslaufenden Nachricht gemäß dem oben beschriebenen individuellen Zeitplan der Verteilereinheit kopiert werden.

Bevorzugt kann also vorgesehen sei, dass die Zeitpläne in den Knotenrechnern und Verteilereinheiten derart aufeinander abgestimmt werden, dass in einer Verteilereinheit der Empfangszeitpunkt (Eintreffzeitpunkt) von zu übertragenden Daten von einem äußeren Sender (Knoten oder äußere Verteilereinheit) plus dem erforderlichen Kopierintervall, und minus dem Vorlaufintervall der auslaufenden Nachricht, in der Verteilereinheit exakt den Zeitpunkt ergibt, zu dem das vorgesehene Datenfeld der Ausgangsnachricht für die Daten zur Verfügung steht, wobei unmittelbar nach dem Ende der Kopieroperation mit dem Senden des vorgesehenen Datenfeldes der Ausgangsnachricht begonnen wird.

Jene "bestimmende" Payload der einlaufenden Nachrichten, welche zur Ermittlung des Beginnzeitpunktes des Sendens einer auslaufenden Nachricht verwendet wird, wird vorzugsweise a priori festgelegt und ist vorzugsweise im Zeitplan enthalten. Die Festlegung erfolgt vorzugsweise auf der Basis der zeitlichen Lage der zu transportierenden Payloads in den einlaufenden und auslaufenden Nachrichten sowie dem Zeitintervall, das erforderlich, um die Payload einer einlaufenden Nachricht in die Payload der entsprechenden auslaufenden Nachricht zu kopieren

Beim gängigen *cut-through Verfahren* [3] wird, entsprechend dem Stand der Technik nach Auswertung des ersten Teils einer einlaufenden Nachricht, dem *Nachrichtenheader,* in dem die Attribute der Nachricht wie Nachrichtentyp, Zieladresse und Senderadresse enthalten sind, mit der Weiterleitung einer einlaufenden Nachricht in Richtung ihres Ziel bereits begonnen, ehe die gesamte Nachricht in der Verteilereinheit eingetroffen ist.

In einer zeitgleich angemeldeten österreichischen Patentanmeldung der Anmelderin [1] wird das Zeitverhalten des gängigen *cut-through* Verfahrens durch Einführung eines *zeitgesteuerten Verfahrens* verbessert. Entsprechend diesem neuen Verfahren werden Attribute, wie z.B. die Zieladresse, einer zeitgesteuerten Echtzeitnachricht *a priori* dem periodischen Zeitschlitz zugewiesen, während dem die periodische zeitgesteuerte Nachricht durch eine Verteilereinheit transportiert werden wird. Nach Eintreffen des Beginns der einlaufenden Nachricht zum *a priori* bekannten Zeitpunkt ist es daher nicht erforderlich zu warten, bis auf die im Header der Nachricht gespeicherten Attribute zugegriffen werden kann, sondern es kann auf der Basis der *a priori* gespeicherten Attribute der Nachricht sofort mit der Weiterleitung der Nachricht in Richtung ihres Ziels begonnen werden. Die *Verzögerungsdauer* der Nachricht in einer Verteilereinheit wird bei diesem neuen Verfahren weitgehend eliminiert.

In vielen Echtzeitsystemen entspricht die Netzwerktopologie einem *In-Tree* [7]. Die an den Blättern dieses In-Trees angeordneten Knotenrechner oder intelligenten Sensoren senden zu *a priori* vorgegebenen, vorzugsweise synchronisierten, Zeitpunkten Sensordaten in der Payload von Nachrichten, insbesondere zeitgesteuerten Echtzeitnachrichten, in Richtung einer an der Wurzel des In-Tree befindlichen *Steuerungszentrale* senden.

Mit der vorliegenden Erfindung entsprechend Anspruch 1 wird das Zeitverhalten des zeitgesteuerten Transports von einer großen Zahl von nahezu gleichzeitig erfassten Echtzeitdaten verbessert, die entsprechend dem *store and foward* Verfahren durch ein Netzwerk, das die Struktur eines In-Trees aufweist, vermittelt werden. Dazu kopieren an den inneren Knoten des In-Tree dazu eingerichtete Verteilereinheiten ("intelligente" Verteilereinheiten) die Payloads von vielen nahezu gleichzeitig eintreffenden Sensornachrichten in die Payload einer neuen Sensornachricht und senden diese neue Sensornachricht mit der erweiterten Payload in Richtung der Steuerungszentrale. Dieser Vorgang wird in jeder Verteilereinheit wiederholt, bis die Steuerungszentrale erreicht wird.

Die oben beschriebene Weiterbildung der Erfindung, bei welcher *a priori* für jede Verteilereinheit ein *individueller Zeitplan* erstellt wird, in welchem ein periodisch wiederkehrender Beginnzeitpunkt des Sendens für eine aus der jeweiligen Verteilereinheit auslaufende Nachricht enthalten ist, reduziert die Verzögerungsdauern von periodischen Echtzeitdaten in einem Netzwerk, dessen Struktur durch einen In-Tree beschrieben werden kann, noch weiter.

Die Zeitdauer, die für das Kopieren benötigt wird, hängt von der Leistungsfähigkeit und Architektur der Verteilereinheit ab. Die Architektur bestimmt, wie viele Bits in einem Datenelement, das in einer Zugriffsoperation gelesen werden kann, enthalten sind.

Zum Beispiel können in einer 32 Bit Architektur 32 Bit mit einem Speicherzugriff gelesen werden. Zum Kopieren von einem Datenelement benötigt ein state-of-the art Rechner weniger als 50 nsec. Somit ergibt sich bei einem Übertragungskanal mit einer Bandbreite von 100 MBit/sec eine Verzögerungsdauer in einer Verteilereinheit von weniger als ca. 200 nsec. Vergleicht man die Transportdauer aus Tab. 1 von 48.5 psec. mit der aufgrund der Erfindung reduzierten Transportdauer von 9.5 psec, so wird die signifikante Reduktion der Transportdauer, die durch diese Erfindung erreicht wird, ersichtlich. Ersetzt man in diesem Beispiel das 100 Mbit/sec Ethernet durch ein 1000 Mbit/sec Ethernet, so reduziert sich diese Transportdauer weiter auf 2.5 psec. Mit dieser Transportdauer lassen sich Regelkreise mit einer Frequenz von weit mehr als 10 KHz über das Netzwerk schließen.

In verteilten Echtzeitsystemen ergibt sich somit eine signifikante Reduktion der Dauer eines Frames. Die damit verbundene wesentliche Verbesserung der Regelungstechnik ist bei schnellen Prozessen, wie z.B. dem *Smart Grid* von großer wirtschaftlicher Bedeutung.

Vorteilhafte Ausgestaltungen des erfindungsgemäßen Verfahrens, der erfindungsgemäßen Verteilereinheit und des erfindungsgemäßen Computersystems, welche jeweils für sich allein oder in beliebiger Kombination sowie in beliebiger Kombination mit den vorstehend beschriebenen Realisierung verwirklicht sein können, sind im Folgenden aufgezählt:
- die Payloads der einlaufenden Nachrichten werden in vorbestimmte Positionen der Payload der auslaufenden Nachricht kopiert;
- eine Verteilereinheit überprüft nach Eintreffen der Prüfsumme einer einlaufenden Nachricht, ob in der einlaufenden Nachricht ein Datenfehler aufgetreten ist, und wobei im Fehlerfall eine Fehlernachricht an die Steuerungszentrale gesendet wird;
- die - dynamischen - Daten werden in einer Nachricht transportiert und die - statische - Beschreibung dieser Daten wird aus der Position der Daten in der Nachricht abgeleitet;
- der Transport von Nachrichten, insbesondere von Echtzeitnachrichten, wird mit dem TTEthernet Protokoll durchgeführt.

Die vorliegende Erfindung wird an Hand der folgenden Zeichnung an einem Beispiel näher erklärt. In dieser zeigt
- Fig. 1: die Struktur eines einfachen Computersystems bzw. Computernetzwerkes,
- Fig. 2: das Format einer typischen Netzwerknachricht, und
- Fig. 3: die zeitliche Abfolge der Ereignisse in einer Verteilereinheit.

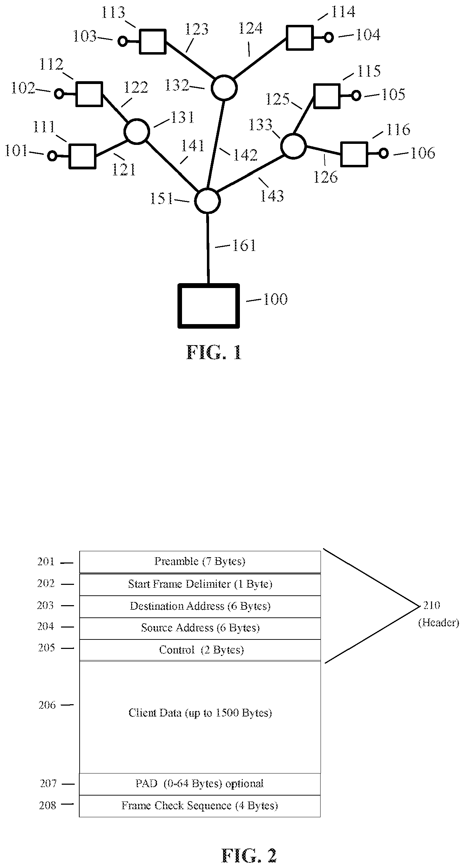

**Figur 1** stellt die Topologie eines Computersystems, insbesondere eines verteilten Echtzeitsystems dar. An den Blättern des In-Trees der **Figur 1** befinden sich Sensoren mit den ihnen zugeordneten Knotenrechnern und Verbindungsleitungen von den Knotenrechnern zu der jeweils nächsten Verteilereinheit. Verbunden ist
- Sensor **101** mit Knotenrechner **111** über Verbindungsleitung **121** zu Verteilereinheit **131**;
- Sensor **102** mit Knotenrechner **112** über Verbindungsleitung **122** zu Verteilereinheit **131;**
- Sensor **103** mit Knotenrechner **113** über Verbindungsleitung **123** zu Verteilereinheit **132;**
- Sensor **104** mit Knotenrechner **114** über Verbindungsleitung **124** zu Verteilereinheit **132;**
- Sensor **105** mit Knotenrechner **115** über Verbindungsleitung **125** zu Verteilereinheit **133;**
- Sensor **106** mit Knotenrechner **116** über Verbindungsleitung **126** zu Verteilereinheit **133.**

Die Verteilereinheit **131,** ein innerer Knoten des In-Trees, ist über die Verbindungsleitung **141** mit einer Verteilereinheit **151** verbunden, ebenso die Verteilereinheit **132** über Verbindungsleitung **142** und die Verteilereinheit **133** über Verbindungsleitung **143.** Schließlich ist die Verteilereinheit **151** über eine Verbindungsleitung **161** mit einer Steuerungszentrale **100** an der Wurzel des In-Trees verbunden.

Die Knotenrechner **111, 112, 113, 114, 115** und **116** haben Zugriff auf eine globale Zeit und übernehmen periodisch gleichzeitig Sensordaten von den zugeordneten Sensoren, um ein konsistentes Abbild eines verteilten Prozesses zu einem a priori vorgegebenen periodischen Zeitpunkt zu erfassen. Die Sensordaten eines Sensors werden von seinem Knotenrechner in eine Nachricht, insbesondere eine Echtzeitnachricht, etwa in eine zeitgesteuerte Ethernet Nachricht kopiert und über eine dedizierte Verbindungsleitung an die nächste Verteilereinheit gesendet. Es sendet
- Knotenrechner **111** über die Verbindungsleitung **121** an die Verteilereinheit **131;**
- Knotenrechner **112** über die Verbindungsleitung **122** an die Verteilereinheit **131;**
- Knotenrechner **113** über die Verbindungsleitung **123** an die Verteilereinheit **132;**
- Knotenrechner **114** über die Verbindungsleitung **124** an die Verteilereinheit **132;**
- Knotenrechner **115** über die Verbindungsleitung **125** an die Verteilereinheit **133**;
- Knotenrechner **116** über die Verbindungsleitung **126** an die Verteilereinheit **133.**

Zu einem a priori bestimmten Zeitpunkt, der in den Zeitplänen der Knotenrechner enthalten ist, wird z.B. ein verteilter technischer Prozess beobachtet. Anschließend werden die Nutzdaten, d.h. die Sensordaten in Echtzeitnachrichten, z.B. TT-Ethernet Nachrichten verpackt. Diese Nachrichten von den Knotenrechnern werden zeitlich parallel zu den entsprechenden Verteilereinheiten transportiert, wo sie zu a priori festgelegten Zeitpunkten eintreffen.

In der Verteilereinheit **131** werden die Payloads der von den Knotenrechnern **111** und **121** empfangenen beiden Ethernet Nachrichten in eine einzige neue Ethernet Nachricht kopiert und diese neue Ethernet Nachricht wird von der Verteilereinheit **131** in Richtung der Steuerungszentrale **100** an der Wurzel des In-Trees gesendet. Ebenso kopiert die Verteilereinheit **132** die Payloads der von den Knotenrechnern **113** und **114** empfangenen beiden Ethernet Nachrichten in eine einzige neue Ethernet Nachricht und sendet diese neue Ethernet Nachricht in Richtung der Steuerungszentrale **100** an der Wurzel des In-Trees. Ebenso kopiert die Verteilereinheit **133** die Payloads der von den Knotenrechnern **115** und **116** empfangenen beiden Ethernet Nachrichten in eine einzige neue Ethernet Nachricht und sendet diese neue Ethernet Nachricht in Richtung der Steuerungszentrale **100** an der Wurzel des In-Trees.

Zu einem weiteren a priori festgelegten Zeitpunkt des Zeitplans der zeitgesteuerten Kommunikation treffen die zeitlich parallel transportierten Ethernet Nachrichten der Verteilereinheiten **131, 132** und **133** bei der Verteilereinheit **151** ein. In der Verteilereinheit **151** werden die Payloads der von den Verteilereinheiten **131, 132** und **133** empfangenen drei Ethernet Nachrichten in eine einzige neue Ethernet Nachricht kopiert und diese neue Ethernet Nachricht wird von der Verteilereinheit **151** über die Verbindungsleitung **161** an die Steuerungszentrale **100** an der Wurzel des In-Trees gesendet.

**Figur 2** zeigt das Format einer typischen Netzwerknachricht, wie sie z.B. in TT*-Ethernet* [2] auftritt. Nach der *Preamble* **201** folgt der *Start Delimiter* **202,** die Ziel Adresse **203,** die Start Adresse **204** und ein Kontrollfeld **205,** das die Länge der Nachricht angeben kann. Die Felder **201, 202, 203 204,205** bezeichnet man als Header **210** der Nachricht. Anschließend an den Header liegt die Payload **206,** das ist der Bereich der Nutzdaten. Wenn nur wenige Bytes an Nutzdaten vorhanden sind, so ist die Nachricht mit dem Feld **207** auf eine minimale Länge zu strecken. Am Ende der Nachricht liegt die *Frame Check Sequence* **208.** In **Figur 2** enthalten die Felder **103, 104,105** die *Attribute* der Nachricht. Diese Attribute sind vorzugsweise im Header **110** der Nachricht enthalten.

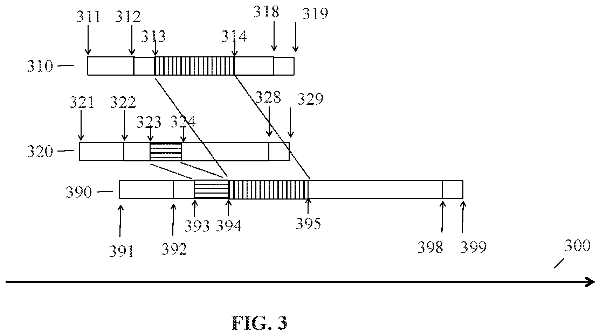

**Figur 3** zeigt die zeitliche Abfolge der Ereignisse in einer Verteilereinheit. Die Abszisse **300** zeigt das Fortschreiten der physikalischen Zeit an. In diesem Beispiel treffen in jedem periodischen Zeitschlitz **[321, 399]** die einlaufende Nachrichten **310** und **320** in der Verteilereinheit ein. Die auslaufende Nachricht **390** verlässt die Verteilereinheit in diesem Zeitschlitz **[321, 399].**

Zum Zeitpunkt **321** trifft das erste Bit des Headers der einlaufenden Nachricht **320** in der Verteilereinheit ein. Der Zeitpunkt **322** markiert das Ende des Headers der Nachricht **320.** Zum Zeitpunkt **323** beginnt die zu transportierende Payload der Nachricht **320.** Zum Zeitpunkt **324** endet die zu transportierende Payload der Nachricht **320.** Im Zeitintervall **[328, 329]** trifft die Prüfsumme der Nachricht **320** in der Verteilereinheit ein.

Zum Zeitpunkt **311** trifft das erste Bit des Headers der einlaufenden Nachricht **310** in der Verteilereinheit ein. Der Zeitpunkt **312** markiert das Ende des Headers der Nachricht **310.** Zum Zeitpunkt **313** beginnt die zu transportierende Payload der Nachricht **310.** Zum Zeitpunkt **314** endet die zu transportierende Payload der Nachricht **310.** Im Zeitintervall **[318, 319]** trifft die Prüfsumme der Nachricht **310** in der Verteilereinheit ein.

Zum Zeitpunkt **391** verlässt das erste Bit des Headers der auslaufenden Nachricht **390** die Verteilereinheit. Der Zeitpunkt **392** markiert das Ende des Headers der Nachricht **390.** Zum Zeitpunkt **393** verlässt das erste Bit der zu transportierenden Payload der Nachricht **320,** die in die Nachricht **390** kopiert wurde, die Verteilereinheit. Zum Zeitpunkt **394** verlässt das erste Bit der zu transportierenden Payload der Nachricht **310,** die in die Nachricht **390** kopiert wurde, die Verteilereinheit. Zum Zeitpunkt **395** verlässt das letzte Bit der zu transportierenden Payload der Nachricht **310,** die in die Nachricht **390** kopiert wurde die Verteilereinheit. Im Zeitintervall **[398, 399]** verlässt die Prüfsumme der Nachricht **390** die Verteilereinheit.

Wir bezeichnen das Zeitintervall **[391,393]** zwischen dem Beginnzeitpunkt der auslaufenden Nachricht **390** und dem Beginn der Payload in der auslaufenden Nachricht **390** als das *Vorlaufintervall* der Nachricht **390.**

Der *a priori* erstellte *individuelle Zeitplan* für jede Verteilereinheit legt den periodisch wiederkehrenden Beginnzeitpunkt 391 des Sendens einer aus einer Verteilereinheit auslaufenden zeitgesteuerten Nachricht 390 *a priori* fest. Dieser Beginnzeitpunkt 391 der auslaufenden Nachricht 390 ergibt sich aus der Differenz zwischen dem *a priori* bekannten Zeitpunkt des Eintreffens einer bestimmenden zu transportierenden Payload der einlaufenden Nachrichten minus dem a priori bekannten Vorlaufintervall [391,393] der auslaufenden Nachricht 390 plus mindestens dem Zeitintervall [323,393], das erforderlich ist, um ein Datenelement der Payload der bestimmenden einlaufenden Nachricht 320 in ein Datenelement der Payload der auslaufenden Nachricht 390 zu kopieren.

Im Fall von **Figur 3** wird die Nachricht **320** zur Berechnung des Beginnzeitpunktes des Sendens der Nachricht **390** verwendet, weil sich in diesem Beispiel aus den a priori festgelegten Positionen der Payloads in den drei Nachrichten **310, 320** und **390** unter Berücksichtigung der Rechnerarchitektur der Verteilereinheit ergibt, dass die Nachricht **320** die *bestimmende Payload* transportiert.

Im Rahmen der Ausführung dieses a *priori* erstellten Zeitplans werden die zu transportierenden Payloads der einlaufenden Nachrichten **310** und **320** der Reihe nach in vorbestimmten Positionen der Payloads der auslaufenden Nachricht **390** kopiert.

Nach dem Zeitpunkt **319** kann die Verteilereinheit nach Analyse der Prüfsumme feststellen, ob der Empfang der Nachricht **310** fehlerfrei erfolgt ist. Wird im Rahmen dieser Analyse der Prüfsumme der Nachricht **310** ein Datenfehler in der Nachricht **310** erkannt, so wird in der Folge eine *Fehlernachricht* an die Steuerungszentrale **100** gesendet.

Nach dem Zeitpunkt **329** kann die Verteilereinheit nach Analyse der Prüfsumme feststellen, ob der Empfang der Nachricht **320** fehlerfrei erfolgt ist. Wird im Rahmen dieser Analyse der Prüfsumme der Nachricht **320** ein Datenfehler in der Nachricht **320** erkannt, so wird in der Folge eine *Fehlernachricht* an die Steuerungszentrale **100** gesendet.

Aufgrund der eintreffenden Fehlernachrichten kann die Steuerungszentrale die betroffenen fehlerhaften Abschnitte der Payload erkennen und Maßnahmen zur Fehlerbehandlung setzten, z.B. den Ersatz der fehlerhaften Payload durch die Payload der vorangegangenen Periode.

### Zitierte Literatur:

[1] Österreichische Patentanmeldung A 50883/2015: *Zeitgesteuertes cut-through Verfahren zum Datentransport in verteilten Echtzeitsystemen*
[3] Wikipedia, *Switch*
   URL: https://de.wikipedia.org/wiki/Switch_(Netzwerktechnik)
[4] SAE Standard AS6802 von TT Ethernet. URL: http://standards.sae.org/as6802
[5] Kopetz, H.. Real-time Systems-Design Principles for Distributed Embedded Applications. Springer Verlag, 2011.
[6] Wikipedia, *Payload*
   URL: https://de.wikipedia.org/wiki/Payload
[7] Wikipedia, *In-Tree*
   URL: https://de.wikipedia.org/wiki/In-Tree
[8] Kopetz, H. A Conceptual Model for the Information Transfer in Systems-of-Systems. Proc. of ISORC 2014, pp. 17-24. IEEE Press.

## Patentansprüche

1. Verfahren, insbesondere zeitgesteuertes fehlertolerantes Verfahren, zum periodischen Transport von Echtzeitdaten in einem Computersystem, insbesondere in einem verteilten Computersystem, welches Computersystem Knotenrechner (**111 -116**), insbesondere eine Vielzahl von Knotenrechnern (**111 -116**), und Verteilereinheiten (**131, 132, 133, 151**), insbesondere eine Vielzahl von Verteilereinheiten (**131, 132, 133, 151**), umfasst, wobei die Knotenrechner und die Verteilereinheiten Zugriff auf eine globale Zeit haben, und wobei Echtzeitdaten mittels zeitgesteuerter Echtzeitnachrichten transportiert werden,
**dadurch gekennzeichnet, dass**
die Topologie des Computersystems einem Intree entspricht, wobei an den Blättern des Intrees Knotenrechner (**111 -116**) angeordnet sind, wobei jedem dieser Knotenrechner (**111** - **116**) jeweils ein oder mehrere Sensoren (**101 - 106**) zugeordnet sind, und wobei die an den Blättern des Intrees angeordneten Knotenrechner (**111 - 116**) zu, vorzugsweise synchronisierten, Zeitpunkten Sensordaten in der Payload von zeitgesteuerten Echtzeitnachrichten in Richtung einer an der Wurzel des Intrees befindlichen Steuerungszentrale (**100**) senden, und wobei
Verteilereinheiten an inneren Knoten des Intrees, insbesondere alle Verteilereinheiten (**131, 132,133,151**) an inneren Knoten des Intrees, welche Echtzeitnachrichten von mehreren Sendern, d.h. von zumindest zwei Knotenrechnern, oder von zumindest zwei Verteilereinheiten, oder von zumindest einem Knotenrechner und zumindest einer Verteilereinheit, empfangen, die Payloads der zwei oder mehreren, insbesondere in einem a priori festgelegten Zeitpunkt oder Zeitfenster, in der jeweiligen Verteilereinheit eintreffenden Echtzeitnachrichten jeweils in die Payload von zumindest einer neuen Echtzeitnachricht, vorzugsweise in die Payload von genau einer neuen Echtzeitnachricht, kopieren,
und wobei diese zumindest eine neue Echtzeitnachricht, insbesondere genau eine neue Echtzeitnachricht, zu einem a priori festgelegten Zeitpunkt, insbesondere von den Verteilereinheiten, in Richtung der Steuerungszentrale (**100**) gesendet wird, und wobei der Payload von einer oder mehreren in einer Verteilereinheit einlaufenden Echtzeitnachrichten mit einer auslaufenden Echtzeitnachricht aus der Verteilereinheit transportiert wird, und wobei
*a priori* für jede Verteilereinheit ein *individueller Zeitplan* erstellt wird, in welchem ein periodisch wiederkehrender Beginnzeitpunkt (**391**) des Sendens für eine aus der jeweiligen Verteilereinheit auslaufende Echtzeitnachricht (**390**) enthalten ist, welcher *a priori* errechnet wird aus
- dem *a priori* bekannten Zeitpunkt des Eintreffens einer bestimmenden, beispielsweise a priori festgelegten, zu transportierenden Payload einer der einlaufenden Echtzeitnachrichten, insbesondere einer zu transportierenden zeitkritischen Payload einer der einlaufenden Nachrichten,
- minus dem a priori bekannten Vorlaufintervall ([**391**,**393**]) der auslaufenden Echtzeitnachricht (**390**),
- plus mindestens einem Zeitintervall ([**323**,393]), das erforderlich ist, um ein Datenelement der bestimmenden Payload, insbesondere der zeitkritischen Payload der einlaufenden Echtzeitnachricht (**320**), in ein Datenelement der Payload der auslaufenden Echtzeitnachricht (**390**) zu kopieren,
und wobei die Payloads der einlaufenden Echtzeitnachrichten durch Ausführung dieses a *priori* erstellten Zeitplans in die Payload der auslaufenden Echtzeitnachricht kopiert werden.

2. Verfahren nach Anspruch 1, **dadurch gekennzeichnet, dass** die Payloads der einlaufenden Echtzeitnachricht in vorbestimmte Positionen der Payload der auslaufenden Nachricht kopiert werden, beispielsweise dass Sensordaten von einem bestimmten Sensor jeweils an eine bestimmte Position in der Payload einer neuen Echtzeitnachricht kopiert werden..

3. Verfahren nach Anspruch 1 oder 2, **dadurch gekennzeichnet, dass** eine Verteilereinheit nach Eintreffen der Prüfsumme einer einlaufenden Echtzeitnachricht überprüft, ob in der einlaufenden Echtzeitnachricht ein Datenfehler aufgetreten ist, und wobei im Fehlerfall eine Fehlernachricht an die Steuerungszentrale (**100**) gesendet wird.

4. Verfahren nach einem der Ansprüche 1 bis 3, **dadurch gekennzeichnet, dass** die - dynamischen - Daten in einer Nachricht transportiert werden und die - statische - Beschreibung dieser Daten aus der Position der Daten in der Echtzeitnachricht abgeleitet wird.

5. Verfahren nach einem der Ansprüche 1 bis 4, **dadurch gekennzeichnet, dass** der Transport von Nachrichten, insbesondere von Echtzeitnachrichten, mit dem TTEthernet Protokoll durchgeführt wird und/ oder die, insbesondere bei den verteilten, Sensoren angeordneten Knotenrechner mit einer von dem TTEthernet Protokoll zur Verfügung gestellten Zeit synchronisiert werden.

6. Verfahren nach einem der Ansprüche 1 bis 5, **dadurch gekennzeichnet, dass** bei einem Kopieren der Sensordaten in eine neue Echtzeitnachricht eine Kennung dieser Daten in die neue Echtzeitnachricht, in welche die Sensordaten kopiert werden, mitkopiert wird.

7. Verteilereinheit zum periodischen Transport von Echtzeitdaten in einem Computersystem, insbesondere einem verteilten Computersystem, welches Computersystem Knotenrechner (**111** - **116**), insbesondere eine Vielzahl von Knotenrechnern (**111** - **116**), und Verteilereinheiten (**131**, **132**, **133**, **151**), insbesondere eine Vielzahl von Verteilereinheiten (**131**, **132**, **133**, **151**), umfasst, wobei die Knotenrechner und die Verteilereinheiten Zugriff auf eine globale Zeit haben, und wobei Echtzeitdaten mittels Nachrichten, vorzugsweise mittels zeitgesteuerter Echtzeitnachrichten, transportiert werden,
und wobei die Topologie des Computersystems einem Intree entspricht, wobei an den Blättern des Intrees Knotenrechner (**111** - **116**) angeordnet sind, wobei jedem dieser Knotenrechner (**111** - **116**) jeweils ein oder mehrere Sensoren (**101** - **106**) zugeordnet sind, und wobei die an den Blättern des Intrees angeordneten Knotenrechner (**111** - **116**) zu, vorzugsweise synchronisierten, Zeitpunkten Sensordaten in der Payload von Nachrichten in Richtung einer an der Wurzel des Intrees befindlichen Steuerungszentrale (**100**) senden,
**dadurch gekennzeichnet, dass**
die Verteilereinheit dazu eingerichtet ist, die Payloads von einer oder mehreren in der Verteilereinheit einlaufenden Nachrichten in eine aus der Verteilereinheit auslaufende Nachricht zu kopieren, wobei
die Verteilereinheit die Payloads der einlaufenden Nachrichten durch Ausführung eines a *priori* für die Verteilerheit erstellten individuellen Zeitplans in die Payload der auslaufenden Nachricht kopiert,
*wobei in dem a priori* für die Verteilereinheit erstellten *individuellen Zeitplan* ein periodisch wiederkehrender Beginnzeitpunkt (**391**) des Sendens für die aus der Verteilereinheit auslaufende zeitgesteuerte Nachricht (**390**) enthalten ist, welcher *a priori* errechnet wird aus
- dem *a priori* bekannten Zeitpunkt des Eintreffens einer bestimmenden, beispielsweise a priori festgelegten, zu transportierenden Payload einer der einlaufenden Nachrichten, insbesondere einer zu transportierenden zeitkritischen Payload einer der einlaufenden Nachrichten,
- minus dem a priori bekannten Vorlaufintervall ([**391**,**393**]) der auslaufenden Nachricht (**390**),
- plus mindestens einem Zeitintervall ([**323**,**393**]), das erforderlich ist, um ein Datenelement der bestimmenden Payload, insbesondere der zeitkritischen Payload der einlaufenden Nachricht (**320**), in ein Datenelement der Payload der auslaufenden Nachricht (**390**) zu kopieren.

8. Verteilereinheit nach Anspruch 7, **dadurch gekennzeichnet, dass** sie die Payloads der einlaufenden Nachrichten in vorbestimmte Positionen der Payload der auslaufenden Nachricht kopiert werden.

9. Verteilereinheit nach Anspruch 7 oder 8, **dadurch gekennzeichnet, dass** die Verteilereinheit nach Eintreffen der Prüfsumme einer einlaufenden Nachricht überprüft, ob in der einlaufenden Nachricht ein Datenfehler aufgetreten ist, und wobei im Fehlerfall eine Fehlernachricht an die Steuerungszentrale (**100**) gesendet wird.

10. Verteilereinheit nach einem der Ansprüche 7 bis 9, **dadurch gekennzeichnet, dass** sie Nachrichten, insbesondere Echtzeitnachrichten, mit dem TTEthernet Protokoll transportiert.

11. Computersystem, insbesondere verteiltes Computersystem, zum periodischen Transport von Echtzeitdaten, welches Computersystem Knotenrechner (**111 - 116),** insbesondere eine Vielzahl von Knotenrechnern (**111** - **116**), und Verteilereinheiten (**131**, **132**, **133**, **151**), insbesondere eine Vielzahl von Verteilereinheiten (**131**, **132**, **133**, **151**), umfasst, wobei die Knotenrechner und die Verteilereinheiten Zugriff auf eine globale Zeit haben, und wobei Echtzeitdaten mittels zeitgesteuerter Echtzeitnachrichten transportiert werden,
**dadurch gekennzeichnet, dass**
die Topologie des Computersystems einem Intree entspricht, wobei an den Blättern des Intrees Knotenrechner **(111 - 116)** angeordnet sind, wobei jedem dieser Knotenrechner (**111** - **116**) jeweils ein oder mehrere Sensoren (**101** - **106**) zugeordnet sind, und wobei die an den Blättern des Intrees angeordneten Knotenrechner **(111 - 116)** zu, vorzugsweise synchronisierten, Zeitpunkten Sensordaten in der Payload von zeitgesteuerten Echtzeitnachrichten in Richtung einer an der Wurzel des Intrees befindlichen Steuerungszentrale (**100**) senden, und wobei
Verteilereinheiten an inneren Knoten des Intrees, insbesondere alle Verteilereinheiten (**131**, **132**, **133**, **151**) an inneren Knoten des Intrees, welche Echtzeitnachrichten von mehreren Sendern, d.h. von zumindest zwei Knotenrechnern, oder von zumindest zwei Verteilereinheiten, oder von zumindest einem Knotenrechner und zumindest einer Verteilereinheit, empfangen, die Payloads der zwei oder mehreren, insbesondere in einem a priori festgelegten Zeitpunkt oder Zeitfenster, in der jeweiligen Verteilereinheit eintreffenden Echtzeitnachrichten jeweils in die Payload von zumindest einer neuen Echtzeitnachricht, vorzugsweise in die Payload von genau einer neuen Echtzeitnachricht, kopieren,
und wobei diese zumindest eine neue Echtzeitnachricht, insbesondere genau eine neue Echtzeitnachricht, zu einem a priori festgelegten Zeitpunkt, insbesondere von den Verteilereinheiten, in Richtung der Steuerungszentrale (**100**) gesendet wird, und
*wobei in dem a priori* für die Verteilereinheit erstellten *individuellen Zeitplan* ein periodisch wiederkehrender Beginnzeitpunkt (**391**) des Sendens für die aus der Verteilereinheit auslaufende zeitgesteuerte Nachricht (**390**) enthalten ist, welcher *a priori* errechnet wird aus
- dem *a priori* bekannten Zeitpunkt des Eintreffens einer bestimmenden, beispielsweise a priori festgelegten, zu transportierenden Payload einer der einlaufenden Nachrichten, insbesondere einer zu transportierenden zeitkritischen Payload einer der einlaufenden Nachrichten,
- minus dem a priori bekannten Vorlaufintervall ([**391**,**393**]) der auslaufenden Nachricht (**390**),
- plus mindestens einem Zeitintervall ([**323**,**393**]), das erforderlich ist, um ein Datenelement der bestimmenden Payload, insbesondere der zeitkritischen Payload der einlaufenden Nachricht (**320**), in ein Datenelement der Payload der auslaufenden Nachricht (**390**) zu kopieren.

12. Computersystem nach Anspruch 11, **dadurch gekennzeichnet, dass** die, insbesondere bei den verteilten, Sensoren angeordneten Knotenrechner mit einer von dem TTEthernet Protokoll zur Verfügung gestellten Zeit synchronisiert werden.

13. Computersystem nach Anspruch 11 oder 12, **dadurch gekennzeichnet, dass** die Echtzeitnachrichten mit dem TTEthernet Protokoll übertragen werden.

14. Computersystem nach einem der Ansprüche 11 bis 13, **dadurch gekennzeichnet, dass** bei einem Kopieren der Sensordaten in eine neue Echtzeitnachricht eine Kennung dieser Daten in die neue Echtzeitnachricht, in welche die Sensordaten kopiert werden, mitkopiert wird.

15. Computersystem nach einem der der Ansprüche 11 bis 14, **dadurch gekennzeichnet, dass** Sensordaten von einem bestimmten Sensor jeweils an eine bestimmte Position in der Payload einer neuen Echtzeitnachricht kopiert werden.

## Claims

1. Method, in particular time-controlled fault-tolerant method, for periodic transport of real-time data in a computer system, in particular distributed computer system, which computer system comprises node computers (111-116), in particular a plurality of node computers (111-116), and distribution units (131, 132, 133, 151), in particular a plurality of distribution units (131, 132, 133, 151), the node computers and the distribution units having access to a global time, and real-time data being transported by means of time-controlled real-time messages,
**characterized in that**
the topology of the computer system corresponds to an in-tree, wherein node computers (111-116) are arranged at the leaves of the in-tree, to each of said node computers (111-116) one or more sensors (101-106) being assigned, and wherein said node computers (111-116) arranged at the leaves of the in-tree transmit sensor data in the payload of time-controlled real-time messages towards a control centre (100) located at the root of the in-tree at preferably synchronized times, and wherein
distribution units at inner nodes of the in-tree, in particular all distribution units (131, 132, 133, 151) at inner nodes of the in-tree, which receive real-time messages from several senders, i.e. from at least two node computers, or from at least two distribution units, or from at least one node computer and at least one distribution unit, copy payloads of the two or more real-time messages arriving at the respective distribution unit in an, in particular *a priori* defined, time or time window respectively into the payload of at least one new real-time message, preferably into the payload of one new real-time message,
and wherein said at least one new real-time message, in particular said one new real-time message, is transmitted at a time defined *a priori,* in particular by the distribution units, towards the control centre (100), and wherein the payload of one or more real-time messages incoming at a distribution unit is transported from the distribution unit with an outgoing real-time message, and wherein
an *individual schedule* is created for each distribution unit *a priori,* which schedule contains a periodically recurring start time (391) of transmission for a real-time message (390) outgoing from the respective distribution unit, which is calculated *a priori* from
- the *a priori* known time of arrival of a determining, for example defined *a priori,* payload to be transported of one of the incoming real-time messages, in particular a time-critical payload to be transported of one of the incoming messages,
- minus the *a priori* known lead time interval ([391,393]) of the outgoing real-time message (390),
- plus at least one time interval ([323,393]) needed for copying a data element of the determining payload, in particular the time-critical payload of the incoming real-time message (320), into a data element of the payload of the outgoing real-time message (390),
and wherein the payloads of the incoming real-time messages are copied into the payload of the outgoing real-time message by executing this *a priori* created schedule.

2. Method according to claim 1, **characterized in that** the payloads of the incoming real-time message are copied into predefined positions of the payload of the outgoing message, for example **in that** sensor data from a particular sensor are copied respectively to a specific position in the payload of a new real-time message.

3. Method according to claim 1 or 2, **characterized in that** a distribution unit, after arrival of the checksum of an incoming real-time message, checks whether a data error has occurred in the incoming real-time message, and wherein, in the event of an error, an error message is sent to the control centre (100).

4. Method according to any one of claims 1 to 3, **characterized in that** the - dynamic - data are transported in a message and the - static - description of said data is derived from the position of the data in the real-time message.

5. Method according to any one of claims 1 to 4, **characterized in that** the transport of messages, in particular of real-time messages, is carried out by means of TTEthernet protocol and/or the node computers arranged, in particular at the distributed sensors, are synchronized with a time provided by the TTEthernet protocol.

6. Method according to any one of claims 1 to 5, **characterized in that** during copying the sensor data into a new real-time message, also an identifier of said data is copied into the new real-time message into which the sensor data are copied.

7. Distribution unit for periodic transport of real-time data in a computer system, in particular distributed computer system, which computer system comprises node computers (111-116), in particular a plurality of node computers (111-116), and distribution units (131, 132, 133, 151), in particular a plurality of distribution units (131, 132, 133, 151), the node computers and the distribution units having access to a global time, and real-time data being transported by means of messages, preferably by means of time-controlled real-time messages,
and wherein the topology of the computer system corresponds to an in-tree, wherein node computers (111-116) are arranged at the leaves of the in-tree, to each of said node computers (111-116) one or more sensors (101-106) being assigned, and wherein said node computers (111-116) arranged on the leaves of the in-tree transmit sensor data in the payload of messages towards a control centre (100) located at the root of the in-tree at preferably synchronized times,
**characterized in that**
the distribution unit is configured to copy the payloads of one or more messages incoming at the distribution unit into a message outgoing from the distribution unit, wherein
the distribution unit copies the payloads of the incoming messages into the payload of the outgoing message by executing an individual schedule created *a priori* for the distribution unit,
wherein the *individual schedule* created *a priori* for the distribution unit contains a periodically recurring start time (391) of transmission for the time-controlled message (390) outgoing from the distribution unit, which is calculated *a priori* from
- the *a priori* known time of arrival of a determining, for example defined *a priori,* payload to be transported of one of the incoming messages, in particular a time-critical payload to be transported of one of the incoming messages,
- minus the *a priori* known lead time interval ([391,393]) of the outgoing message (390),
- plus at least one time interval ([323,393]) needed to copy a data element of the determining payload, in particular the time-critical payload of the incoming message (320), into a data element of the payload of the outgoing message (390).

8. Distribution unit according to claim 7, **characterized in that** it copies the payloads of the incoming messages into predefined positions of the payload of the outgoing message.

9. Distribution unit according to claim 7 or 8, **characterized in that** the distribution unit, after arrival of the checksum of an incoming message, checks whether a data error has occurred in the incoming message, and wherein, in the event of an error, an error message is sent to the control centre (100).

10. Distribution unit according to any one of claims 7 to 9, **characterized in that** it transports messages, in particular real-time messages, using the TTEthernet protocol.

11. Computer system, in particular distributed computer system, for periodic transport of real-time data, which computer system comprises node computers (111-116), in particular a plurality of node computers (111-116), and distribution units (131, 132, 133, 151), in particular a plurality of distribution units (131, 132, 133, 151), the node computers and the distribution units having access to a global time, and real-time data being transported by means of time-controlled real-time messages,
**characterized in that**
the topology of the computer system corresponds to an in-tree, wherein node computers (111-116) are arranged at the leaves of the in-tree, to each of said node computers (111-116) one or more sensors (101-106) being assigned, and wherein the node computers (111-116) arranged at the leaves of the in-tree transmit sensor data in the payload of time-controlled real-time messages towards a control centre (100) located at the root of the in-tree at preferably synchronized times, and wherein
distribution units at inner nodes of the in-tree, in particular all distribution units (131, 132, 133, 151) at inner nodes of the in-tree, which receive real-time messages from several senders, i.e. from at least two node computers, or from at least two distribution units, or from at least one node computer and at least one distribution unit, copy payloads of the two or more real-time messages arriving at the respective distribution unit in an, in particular *a priori* defined, time or time window, respectively into the payload of at least one new real-time message, preferably into the payload of one new real-time message,
and wherein said at least one new real-time message, in particular said one new real-time message, is transmitted at a time defined *a priori,* in particular by the distribution units, towards the control centre (100), and
wherein in the *individual schedule* created *a priori* for the distribution unit contains a periodically recurring start time (391) of transmission for the time-controlled message (390) outgoing from the distribution unit, which is calculated *a priori* from
- the *a priori* known time of arrival of a determining, for example defined *a priori,* payload to be transported of one of the incoming messages, in particular a time-critical payload to be transported of one of the incoming messages,
- minus the *a priori* known lead time interval ([391,393]) of the outgoing message (390),
- plus at least one time interval ([323,393]) needed for copying a data element of the determining payload, in particular the time-critical payload of the incoming message (320), into a data element of the payload of the outgoing message (390).

12. Computer system according to claim 11, **characterized in that** the node computers arranged, in particular at the distributed sensors, are synchronized with a time provided by the TTEthernet protocol.

13. Computer system according to claim 11 or 12, **characterized in that** the real-time messages are transmitted using the TTEthernet protocol.

14. Computer system according to any one of claims 11 to 13, **characterized in that** during copying the sensor data into a new real-time message, also an identifier of said data is copied into the new real-time message into which the sensor data are copied.

15. Computer system according to any one of claims 11 to 14, **characterized in that** sensor data from a particular sensor are copied to a specific position in the payload of a new real-time message.

## Revendications

1. Procédé, notamment procédé tolérant de défaillances et commandé par le temps, pour le transport périodique de données en temps réel dans un système informatique, notamment dans un système informatique réparti, lequel système informatique comprend des ordinateurs nodaux (111-116), notamment une pluralité d'ordinateurs nodaux (111-116), et des unités de distribution (131, 132, 133, 151), notamment une pluralité d'unités de distribution (131, 132, 133, 151), les ordinateurs nodaux et les unités de distribution ayant accès à un temps global, et des données en temps réel étant transportées au moyen de messages en temps réel commandés par le temps,
**caractérisé en ce que**
la topologie du système informatique correspond à un in-tree, des ordinateurs nodaux (111-116) étant disposés sur les feuilles de l'in-tree, dans lequel un ou plusieurs capteurs (101-106) sont attribués à chacun desdits ordinateurs nodaux (111-116), et les ordinateurs nodaux (111-116) disposés sur les feuilles de l'in-tree transmettant des données de capteur dans la charge utile de messages en temps réel commandés par le temps en direction d'un centre de contrôle (100) situé à la racine de l'in-tree à des moments de préférence synchronisés, et
les unités de distribution situées aux nœuds intérieurs de l'in-tree, notamment toutes les unités de distribution (131, 132, 133, 151) situées aux nœuds intérieurs de l'in-tree, qui distribuent des messages en temps réel provenant de plusieurs émetteurs, c'est-à-dire d'au moins deux ordinateurs nodaux, ou d'au moins deux unités de distribution, ou d'au moins un ordinateur nodal et d'au moins une unité de distribution, copiant les charges utiles des deux ou plusieurs messages en temps réel arrivant dans l'unité de distribution respective, notamment à un moment ou à une fenêtre de temps définis a priori, respectivement dans la charge utile d'au moins un nouveau message en temps réel, de préférence dans la charge utile d'exactement un nouveau message en temps réel,
et dans lequel cet au moins un nouveau message en temps réel, notamment exactement un nouveau message en temps réel, est transmis à un moment défini a priori, notamment par les unités de distribution, en direction du centre de contrôle (100), et la charge utile d'un ou plusieurs messages en temps réel entrant dans une unité de distribution est transportée depuis l'unité de distribution avec un message en temps réel sortant, et
un programme individuel étant créé a priori pour chaque unité de distribution, dans lequel est contiente une heure de début (391) de transmission périodique pour un message en temps réel (390) quittant l'unité de distribution respective, qui est calculée a priori à partir de
- l'heure d'arrivée connue a priori d'une charge utile déterminante, par exemple défini a priori, à transporter de l'un des messages entrants en temps réel, notamment une charge utile à transporter à temps critique de l'un des messages entrants,
- moins l'intervalle de délai a priori connu ([391,393]) du message sortant en temps réel (390),
- plus au moins un intervalle de temps ([323,393]) nécessaire pour copier un élément de données de la charge utile déterminante, notamment la charge utile à temps critique du message en temps réel entrant (320), vers un élément de données de la charge utile du message en temps réel sortant (390),
et dans lequel les charges utiles des messages en temps réel entrants sont copiées dans les charges utiles du message en temps réel sortant en exécutant ce programme créé a priori.

2. Procédé selon la revendication 1, **caractérisé en ce que** les charges utiles du message en temps réel entrant sont copiées dans des positions prédéterminées de la charge utile du message sortant, par exemple les données d'un capteur particulier sont copiées respectivement à une position particulière dans la charge utile d'un nouveau message en temps réel.

3. Procédé selon la revendication 1 ou 2, **caractérisé en ce qu'**une unité de distribution, après l'arrivée de la somme de contrôle d'un message en temps réel entrant, vérifie si une erreur de données s'est produite dans le message en temps réel entrant, et en cas d'erreur, un message d'erreur est envoyé au centre de contrôle (100).

4. Procédé selon l'une quelconque des revendications 1 à 3, **caractérisée en ce que** les données - dynamiques - sont transportées dans un message, et la description - statique - de ces données est dérivée de la position des données dans le message en temps réel.

5. Procédé selon l'une quelconque des revendications 1 à 4, **caractérisé en ce que** le transport de messages, notamment de messages en temps réel, est effectué avec le protocole TTEthernet et/ ou les ordinateurs nodaux disposés, notamment au niveau des capteurs répartis, sont synchronisés avec un temps mis à disposition par le protocole TTEthernet.

6. Procédé selon l'une quelconque des revendications 1 à 5, **caractérisé en ce que** lorsque les données du capteur sont copiées dans un nouveau message en temps réel, un identificateur de ces données est également copié dans le nouveau message en temps réel dans lequel les données du capteur sont copiées.

7. Unité de distribution pour le transport périodique de données en temps réel dans un système informatique, notamment un système informatique réparti, lequel système informatique comprend des ordinateurs nodaux (111-116), notamment une pluralité d'ordinateurs nodaux (111-116), et des unités de distribution (131, 132, 133, 151), notamment une pluralité d'unités de distribution (131, 132, 133, 151), les ordinateurs nodaux et les unités de distribution ayant accès à un temps global, et des données en temps réel étant transportées au moyen de messages, de préférence au moyen de messages en temps réel commandés par le temps,
et dans laquelle la topologie du système informatique correspond à un in-tree, des ordinateurs nodaux (111-116) sont disposés sur les feuilles de l'in-tree, dans lequel un ou plusieurs capteurs (101-106) sont attribués à chacun desdits ordinateurs nodaux (111-116), et les ordinateurs nodaux (111-116) disposés sur les feuilles de l'in-tree transmettant des données de capteurs dans la charge utile de messages en direction d'un centre de contrôle (100) situé à la racine de l'in-tree à des moments de préférence synchronisés,
**caractérisé en ce que**
l'unité de distribution est configurée pour copier les charges utiles d'un ou plusieurs messages entrant dans l'unité de distribution dans un message sortant de l'unité de distribution,
l'unité de distribution copie la charge utile des messages entrants dans la charge utile du message sortant en exécutant un programme individuel créé a priori pour l'unité de distribution,
le calendrier individuel créé a priori pour l'unité de distribution contenant une heure de début (391) de transmission périodique pour le message (390) commandé par le temps sortant de l'unité de distribution, qui est calculée a priori à partir de
- l'heure d'arrivée connue a priori d'une charge utile déterminante, par exemple défini a priori, à transporter d'un des messages entrants, notamment une charge utile à transporter à temps critique d'un des messages entrants,
- moins l'intervalle de temps a priori connu ([391,393]) du message sortant (390),
- plus au moins un intervalle de temps ([323,393]) nécessaire pour copier un élément de données de la charge utile déterminante, notamment la charge utile à temps critique du message entrant (320), vers un élément de données de la charge utile du message sortant (390).

8. Unité de distribution selon la revendication 7, **caractérisée en ce qu'**elle copie les charges utiles des messages entrants dans des positions prédéterminées de la charge utile du message sortant.

9. Unité de distribution selon la revendication 7 ou 8, **caractérisée en ce que** l'unité de distribution, après l'arrivée de la somme de contrôle d'un message entrant, vérifie si une erreur de données s'est produite dans le message entrant, et en cas d'erreur, un message d'erreur est envoyé au centre de contrôle (100).

10. Unité de distribution selon l'une quelconque des revendications 7 à 9, **caractérisée en ce qu'**elle transporte des messages, notamment des messages en temps réel, en utilisant le protocole TTEthernet.

11. Système informatique, notamment système informatique distribué, pour le transport périodique de données en temps réel, lequel système informatique comprend des ordinateurs nodaux (111 -116), notamment une pluralité d'ordinateurs nodaux (111 - 116), et des unités de distribution (131, 132, 133, 151), notamment une pluralité d'unités de distribution (131, 132, 133, 151), les ordinateurs nodaux et les unités de distribution ayant accès à un temps global, et des données en temps réel étant transportées au moyen de messages en temps réel commandés par le temps,
**caractérisé en ce que**
la topologie du système informatique correspond à un in-tree, des ordinateurs nodaux (111-116) étant disposés sur les feuilles de l'in-tree, dans lequel un ou plusieurs capteurs (101-106) sont attribués à chacun desdits ordinateurs nodaux (111-116), et les ordinateurs nodaux (111-116) disposés sur les feuilles de l'in-tree transmettant des données de capteur dans la charge utile de messages en temps réel commandés par le temps en direction d'un centre de contrôle (100) situé à la racine de l'in-tree à des heures de préférence synchronisées, et
les unités de distribution situées aux nœuds intérieurs de l'in-tree, notamment toutes les unités de distribution (131, 132, 133, 151) situées aux nœuds intérieurs de l'in-tree, qui distribuent des messages en temps réel provenant de plusieurs émetteurs, c'est-à-dire d'au moins deux ordinateurs nodaux, ou d'au moins deux unités de distribution, ou d'au moins un ordinateur nodal et d'au moins une unité de distribution, copiant les charges utiles des deux ou plusieurs messages en temps réel arrivant dans l'unité de distribution respective, notamment à un moment ou à une fenêtre de temps définis a priori, respectivement dans la charge utile d'au moins un nouveau message en temps réel, de préférence dans la charge utile d'exactement un nouveau message en temps réel,
et dans lequel cet au moins un nouveau message en temps réel, notamment exactement un nouveau message en temps réel, est envoyé à un moment défini a priori, notamment par les unités de distribution, en direction du centre de contrôle (100), et
le calendrier individuel créé a priori pour l'unité de distribution contenant une heure de début (391) de transmission périodique pour le message (390) commandé par le temps sortant de l'unité de distribution, qui est calculée a priori à partir de
- l'heure d'arrivée connue a priori d'une charge utile déterminante, par exemple défini a priori, à transporter d'un des messages entrants, notamment une charge utile à transporter à temps critique d'un des messages entrants,
- moins l'intervalle de temps a priori connu ([391,393]) du message sortant (390),
- plus au moins un intervalle de temps ([323,393]) nécessaire pour copier un élément de données de la charge utile déterminante, notamment la charge utile à temps critique du message entrant (320), vers un élément de données de la charge utile du message sortant (390).

12. Système informatique selon la revendication 11, **caractérisé en ce que** les ordinateurs nodaux disposés, notamment au niveau des capteurs répartis, sont synchronisés avec un temps fourni par le protocole TTEthernet.

13. Système informatique selon la revendication 11 ou 12, **caractérisé en ce que** les messages en temps réel sont transmis avec le protocole TTEthernet.

14. Système informatique selon l'une quelconque des revendications 11 à 13, **caractérisé en ce que** lorsque les données du capteur sont copiées dans un nouveau message en temps réel, un identificateur de ces données est également copié dans le nouveau message en temps réel dans lequel les données du capteur sont copiées.

15. Système informatique selon l'une quelconque des revendications 11 à 14, **caractérisé en ce que** les données d'un capteur particulier sont copiées à une position particulière dans la charge utile d'un nouveau message en temps réel.
